# EUROPEAN PATENT APPLICATION

(11) **EP 1 278 349 A1**
(43) Date of publication of application: **22.01.2003**
(21) Application number: 01908319.5
(22) Date of filing: 05.03.2001
(51) Int. Cl.: H04L 29/06, H04J 13/00

(54) **TRANSMISSION FORMAT JUDGING METHOD**

(71) Applicant: MITSUBISHI DENKI KABUSHIKI KAISHA, Tokyo 100-8310 (JP)
(72) Inventor: UGA, Shinsuke, MITSUBISHI DENKI KABUSHIKI KAISHA, Chiyoda-ku, Tokyo 100-8310 (JP)
(74) Representative: Sajda, Wolf E., Dipl.-Phys.
(86) International application number: JP0101696
(87) International publication number: WO02071724

(57) **Abstract**

In a transport format decision method in which circuit switched or continuous data, or packet switched data is transported in a specified transport format together with an identification code indicating the transport format or a combination of transport formats, and the transport format of the data is determined by decoding the identification code, the data format of the circuit switched or continuous data is assumed to exist at all times regardless of the result of decoding of the identification code, and once reception is determined based on the identification code, it is assumed to exist at all times regardless of the result of decoding of the identification code, a method can be presented for determining the validity of the result of error correction decoding.

## Description

### Technical Field

The present invention relates to a transport format decision method. More specifically, the present invention relates to a transport format decision method determining a transport format of transmitted data based on a Reed-Muller coded TFCI (Transport Format Combination Indicator) transferred in association with the transmitted data, in a communication system defined by 3^{rd} Generation Partnership Project (3GPP).

### Background Art

In the 3GPP defined communication system, communication of various services is made possible to meet various demands in communications, and specification that can support a transmission rate of up to 2Mbps is defined.

The services include continuous data such as voice and moving pictures, as well as high speed packets, and the system is characterized in that a plurality of services are multiplexed to be transported over one or multiple channels (physical channels) on a physical layer.

In the 3GPP defined communication system, in order to realize communication of various different types of data mentioned above, an agreement is made on Transport Format Combination Set (TFCS) for a layer 3 message. Which Transport Format Combination (TFC) in the set is to be used for transport is selected, dependent on the transport flow rate, by an MAC (Medium Access Control) layer which is a sub layer of the second layer on the transmitting side, and an indicator (Transport Format Combination Indicator-TFCI) indicating the combination of the transport formats is transferred in association with the transport data.

In the second layer, based on the selected transport format, error correction coding of the transport data itself and mapping to the physical channel are performed. On the receiving side, in order to perform format conversion from the physical channel to the channel for transport/error correction decoding, it is necessary to recognize the format based on the TFCI transmitted in association with the data, as means for recognizing which transport format combination (TFC) has been used for transport. Based on the TFCI, the aforementioned transport format combination set (TFCS) is referred to, the transfer format combination (TFC) is recognized, and format conversion from the physical channel to the channel (transport channel) for transport /error correction decoding are performed.

Here, communication refers to radio communication, and therefore, it is necessary to consider a case where transport environment is deteriorated. In 3GPP defined communication system, it is defined that error correction protection is performed on the actual transport data, using Turbo code with coding ratio of 1/3 or a convolutional code with the coding ratio of 1/2 or 1/3.

Further, it is defined that as the TFCI transmitted in association with the data is coded with (32, 10) sub-code of second order Reed-Muller code or (16, 5) bi-orthogonal code (first order Reed-Muller code). Compared with the Turbo code or convolutional code, the Reed-Muller code has lower correction capability.

However, the format conversion from the physical channel to the plurality of transport channels and the following error correction decoding mentioned above are performed based on the result of TFCI error correction decoding. More specifically, when there is an error in TFCI detection, error correction decoding of the data itself becomes impossible. Thus, error characteristic of the TFCI becomes a bottleneck, determining the overall reception performance.

The number of transport formats for each transport channel differs depending on the type of the transport channel. For example, for a transport channel to which continuously transmitted data (of circuit switched type) such as ISDN or AV is allocated, there are only two transport formats in actual cases, that is, one in which a fixed block length is present, and the other in which it is non-existent. Also in this case, once data transmission starts, the data will not be discontinued in actual cases, until the channel is stopped on the radio circuit.

Further, it is noted that the processing unit for determining TFC may sometimes differ from the transport unit of TFCI. The TFCI transport unit is 1 radio frame unit (transport unit on the physical channel), and TFC may be determined in 2 radio frame units or more. In such cases, one same TFCI might be transmitted twice.

Further, there may be cases where a transport format exists for each transport channel, while processing unit differs for every transport channel. For example, assume that there are two transport channels, and processing unit for one transport channel A is 2 radio frame units, while it is 4 radio frame units for the other transport channel B. In such a case, the transport format of transport channel A can be changed to 2 radio frame units, and the transport format of transport channel B can be changed to 4 radio frame units. As the TFCI is changed by the minimum processing unit for each transport channel, the TFCI may be changed by 2 radio frame units in such a case.

### Disclosure of the Invention

Therefore, the main object of the present invention is to provide a useful transport format decision method considering characteristic of the circuit switched data itself; processing unit of each transport channel and change cycle of the transport format for each transport channel.

The present invention provides a transport format decision method including the first step of receiving data and an identification code indicating transport format thereof, the second step of decoding the received identification code, the third step of determining validity of the result of decoding in the second step, the fourth step of determining the type of the received data, and the fifth step of determining, if the result of decoding is determined to be invalid, the transport format based on the type determined in the forth step.

More preferably, the transport format includes a first type format indicating presence of data contents and a second type format indicating non-existence of data contents, and when the data type determined in the fourth step to be the circuit switched or continuous, the format is decided to be the first type format in the fifth step.

According to another aspect, the present invention provides a transport format decision method including the first step of receiving, for each frame in one transmission time, transmitted data and an identification code indicating the transport format thereof, the second step of determining existence/non-existence of a decided transport format that is decoded by an identification code of another frame received in one transmission time with the result of decoding being determined valid, and the third step of determining, if the decided transport format is determined to be present in the second step, the transport format of data in such frame to be the same as the decided transport format.

More preferably, the method further includes the fourth step of decoding the identification code of such frame and determining validity of the result of decoding, and, if the result of decoding is determined to be invalid in the fourth step, performing the decision process of the third step.

According to a further aspect, the present invention provides a transport format decision method, including the first step of receiving per frame in one transmission time, transmitted data and an identification code indicating the transport format thereof, the second step of decoding, per frame, the identification code within such frame, and the third step of determining, based on the result of decoding per dame and significance of respective results of decoding in the second step, the decided transport format in one transmission time.

More preferably, the method further includes the fourth step of threshold decision on reliability information of the result of decoding, and the fifth step of determining its significance, based on the result of the threshold decision.

According to a further aspect, the present invention provides a transport format decision method, including the first step of receiving, per frame, circuit switched or continuous data and identification code indicating transport format thereof, the second step of decoding the received identification code, the third step of determining, based on the result of decoding in the second step, the transport format, and the fourth step of regarding, if the transfer format is determined to indicate presence of data contents in the third step, the transport format as an decided transport format, and determining the transport format of the data received in communication thereafter to be the same as the decided transport format.

### Brief Description of the Drawings

Fig. 1 is a block diagram representing an overall configuration of a W-CDMA radio communication terminal device in accordance with one embodiment of the present invention.
Fig. 2 shows a process flow of received data and TFCI, for controlling receiving part of transmission path coding unit shown in Fig. 1.
Fig. 3 is a flow chart representing procedures in accordance with one embodiment of the present invention.
Fig. 4 is a flow chart showing an example of determining validity of the result of decoding TFCI shown in Fig. 3.
Figs. 5A to 5C are tables representing specific examples of transport format sets of two given channels, and an example transport format combination set thereof.
Fig. 6 represents an example of respective transport channels and TFCI transport, viewed from each transport channel per unit time the example of Fig. 5.
Figs. 7A to 7D represent examples of respective transport channels and TFCI transport, viewed from each transport channel per unit time, when a packet switched data is allocated to transport channel #1 and a circuit switching type data is allocated to the transport channel #2 according to the examples of Figs. 5A to 5C.

### Best Modes for Carrying Out the Invention

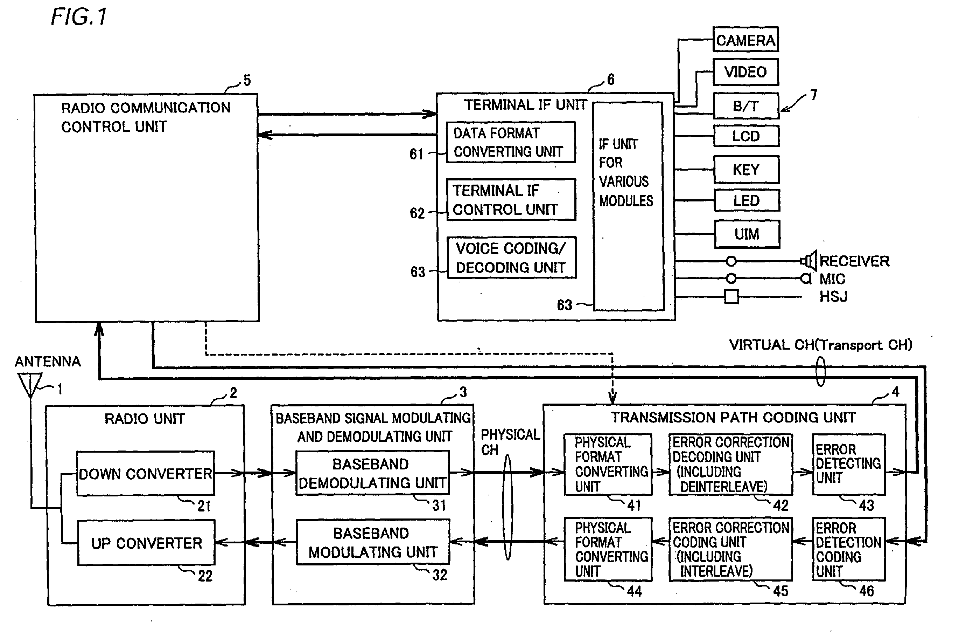

Fig. 1 is a block diagram representing an overall configuration of the W-CDMA radio communication terminal device in accordance with one embodiment of the present invention. Referring to Fig. 1, an antenna 1 is connected to a radio unit 2. Radio unit 2 includes down converter 21 and up converter 22. Down converter 21 converts a high frequency signal of a reception band to a baseband signal, and up converter 22 converts the baseband signal to a high frequency signal of a transmission band.

Baseband signal modulating and demodulating unit 3 includes baseband demodulating unit 31 and baseband modulating unit 32. Baseband demodulating unit 31 performs baseband demodulation on a signal that has been down converted and A/D converted at radio unit 2. In the CDMA system, despreading demodulation, rake combining and other operations are performed. Baseband modulating unit 32 performs baseband modulation on a signal that has been subjected to error correction coding and converted to a physical channel at transmission path coding unit 4. In the CDMA system, spreading modulation is performed.

Transmission path coding unit 4 includes physical format converting unit 44, an error correction coding unit 45 including interleaving and error detection coding unit 46 of transmitting part, as well as a physical format converting unit 41, error correction decoding unit 42 including deinterleaving, and error detecting unit 43 of receiving part.

Physical format converting unit 41 multiplexes and demultiplexes one or multiple received physical channels to one or multiple determined transport channels, error correction decoding unit 42 performs error correction decoding of a transport channel block, and error detecting unit 43 performs error detection of the corrected transport channel block. Error correction decoding unit 46 adds an error detection code to the block(s) of one or multiple transport channels transferred from an upper layer, error correction coding unit 45 performs error correction coding on the data to which the error detection code has been added, and the physical format converting unit 44 multiplexes multiple transport channels and maps to a physical channel.

Radio communication control unit 5 performs protocol control for radio communication, control of radio unit 2, baseband modulating and demodulating unit 3 and transmission path coding unit 4 therefor, and communicates with terminal IF unit 6. Terminal IF unit 6 has an IF function for user IF modules such as a camera or an LCD, and includes data format converting unit 61, terminal IF control unit 62, voice coding/decoding unit 63 and IF unit 64 for various modules.

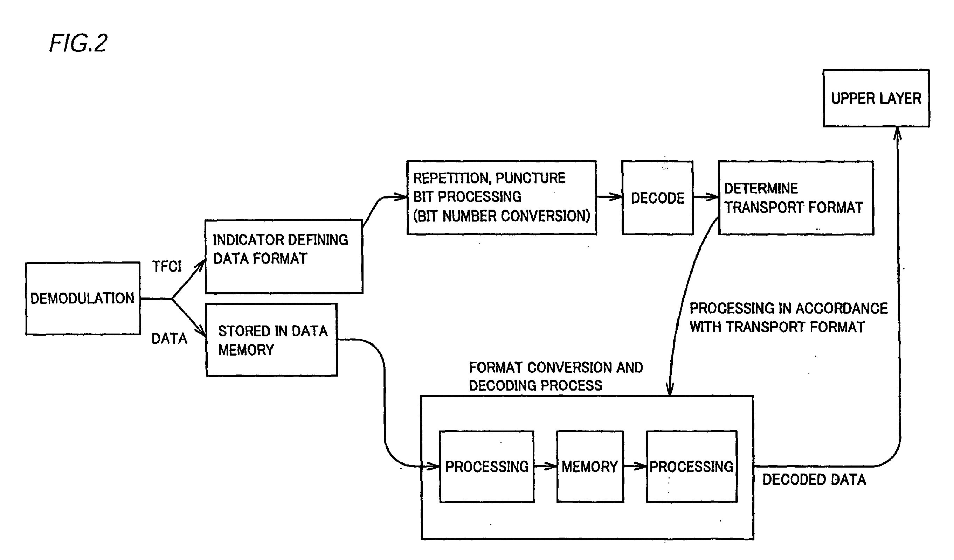

Fig. 2 shows a process flow of received data and TFCI, for controlling the receiving part of the transmission path coding unit in accordance with one embodiment of the present invention. The TFCI and the data that have been demodulated at baseband signal modulating and demodulating unit 3 are demultiplexed as shown in Fig. 2, and the data is temporarily stored in a memory. The TFCI transported over the physical channel has been subjected to bit repetition process or bit puncturing process, to be adapted to physical channel format. Such TFCI is subjected to reverse process of the repetition or puncturing, so that it is converted to the number of bits after the error correction coding.

Thereafter, error correction decoding process is performed, and a decoded TFCI is obtained. The transport format of each transport channel is determined based on the TFCI, and the data is processed based on the determined transport format.

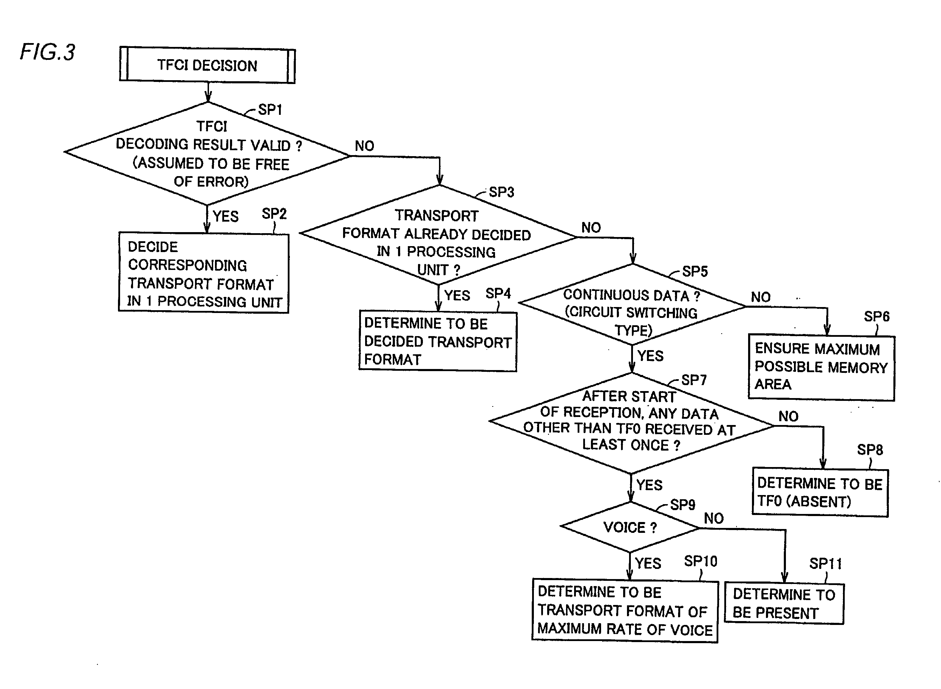

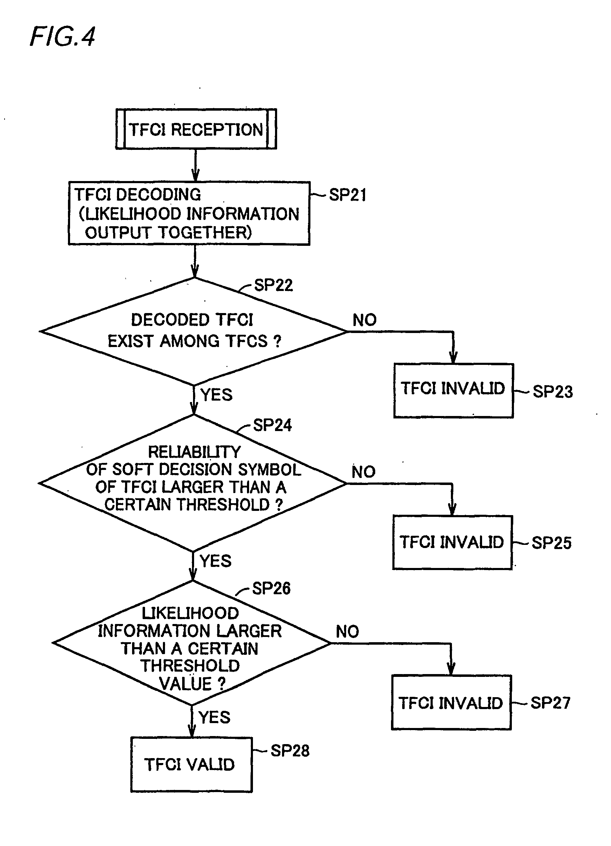

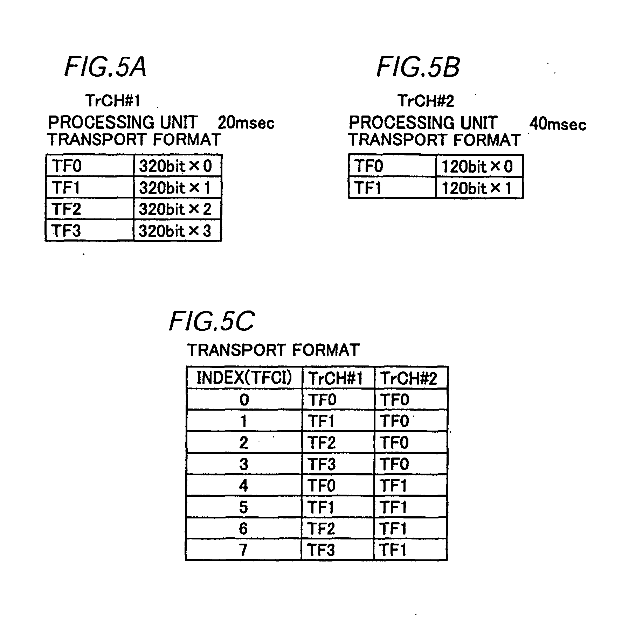

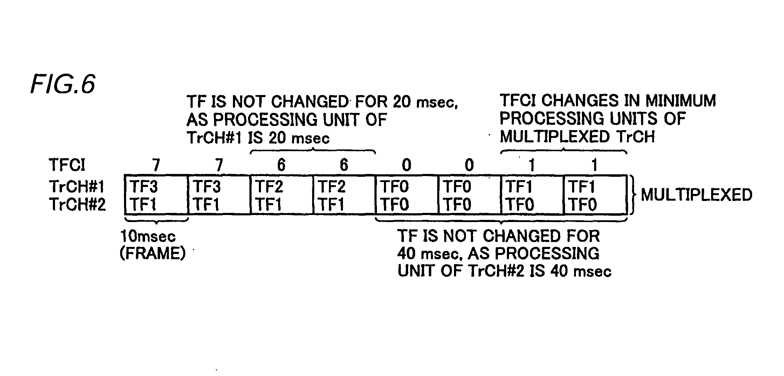

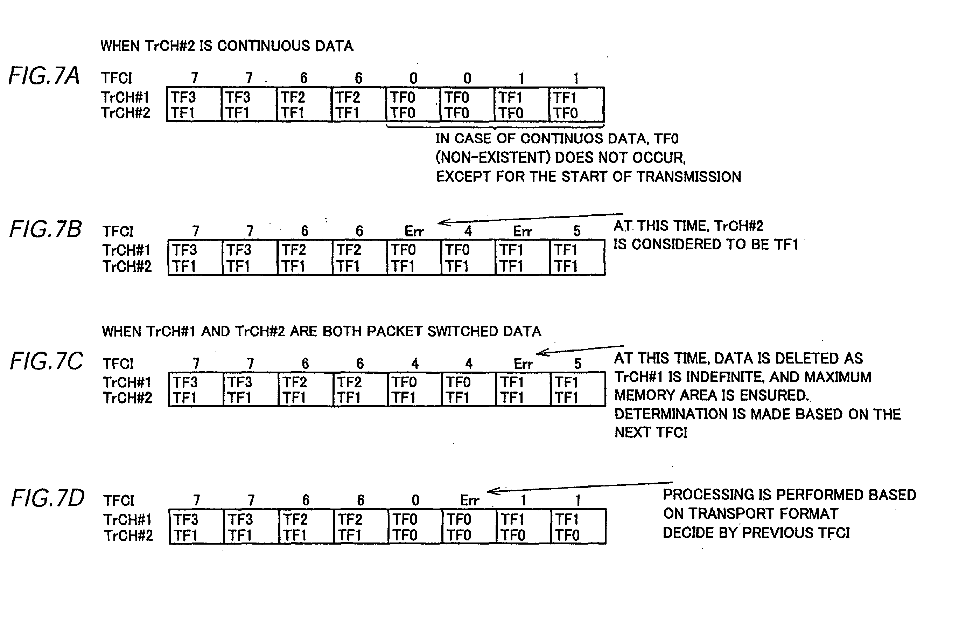

Fig. 3 is a flow chart representing an operation in accordance with one embodiment of the present invention. Fig. 4 is a flow chart showing an example of determining validity of the result of TFCI decoding shown in Fig. 3. Figs. 5A to 5C are tables representing specific examples of transport format sets of two given channels, and transport format combination sets thereof. Fig. 6 represents an example of TFCI transport and respective transport channels, viewed from each transport channel per unit time based on the example of Fig. 5. Figs. 7A to 7D represent examples of TFCI transport and respective transport channels, viewed from each transport channel per unit time, when a packet switching type data is allocated to transport channel #1 and a circuit switching type data is allocated to the transport channel #2 according to the examples of Figs. 5A to 5C.

An embodiment of the present invention will be discussed in detail, with reference to Figs. 1 to 7.

On a physical channel, multiple transport channels are multiplexed and transported. For instance, let us consider the example shown in Figs. 5A to 5C. Here, assume there are two transport channels, that is, transport channel #1 and transport channel #2. Further, assume there is a transmission time interval (processing unit) for each transport channel, that is, 20 msec for process unit of transport channel #1, and 40 msec for process unit of transport channel #2.

A transport format for every transmission time interval is defined for respective transport channels. Assume that the transport format for transport channel #1 includes four types, that is, 320 bits × 0, 320 bits × 1, 320 bits × 2, and 320 bits × 3, as shown in Fig. 5A.

Further, assume that the transport format for transport channel #2 includes two types, that is, 120 bits × 0 and 120 bits × 1, as shown in Fig. 5B. These two transport channels are multiplexed for transmission, and therefore, there are combinations of transport channel transport formats. Transport format combinations (TFC) and its transport format combination set (TFCS) are as shown in Fig. 5C.

An identification code indicating such TFC is referred to as a TFCI. Namely, when TFCI is 0, it indicates a combination of transport format TF0 (320 bits × 0) for transport channel #1 and transport format of TF0 (120 bits × 0) for transport channel #2, and when TFCI is 5, it indicates a combination of transport format of TF1 (320 bits × 1) for transport channel #1 and transport format of TF1 (120 bits × 1) for transport channel #2.

Data and TFCI are transmitted together, and on the receiving side, TFCS (the table of Fig. 5C) is referred to based on the received TFCI to determine transport formats for respective transport channels of the data in the minimum transmission units, and format conversion of the data from physical channel to the multiple transport channels as well as error correction decoding are performed. In the following, the method of transport format determining process in accordance with an embodiment of the invention will be described.

In the step (denoted as SP in the figure) SP1 of Fig. 3, whether the result of decoding of the TFCI is valid or not is determined. More specifically, the TFCI is not subjected to error detection coding, and therefore, whether the value output as a result of error correction decoding is erroneous or not is determined. Fig. 4 is a flow chart showing an embodiment of this determination. In SP21 of Fig. 4, while TFCI is decoded, likelihood information related to the reliability corresponding to the result of decoding is output.

In SP22, whether the decoded TFCI exists in the TFCS or not is determined. When the decoded TFCI does not exist in the TFCS, it is determined in SP23 that the result of TFCI decoding is invalid. When the TFCI exists in the TFCS, whether the reliability of a soft decision symbol of the coded (before decoding) TFCI is larger than a certain threshold value or not is determined in SP24. Here, the certain threshold value is assumed to be a fixed level. When the reliability is smaller than the certain threshold value, it is determined in SP25 that the decoded TFCI is invalid.

When the reliability is larger than a certain threshold value, whether the likelihood information related to the reliability corresponding to the result of decoding is higher than a certain threshold value or not is determined in SP26. It is assumed that the information related to the reliability corresponding to the result of the decoding is output at the time of decoding process of TFCI. When the likelihood information is lower than the certain threshold value, it is determined in SP27 that the decoded TFCI is invalid, and when it is higher than the threshold value, it is determined in SP28 that the decoded TFCI is valid.

When it is determined that the TFCI is valid in this manner, the transport format per 1 processing unit of each transport channel is decided in SP2 of Fig. 3. However, it is assumed that when a transport format is already decided for a transport channel, the one decided initially is adopted for the transport format.

When it is determined that the result of decoding the TFCI is erroneous, whether the transport format has already been decided or not within 1 processing unit of the transport channel is determined in SP3. Here, 1 processing unit refers to 20 msec (for transport channel #1) or 40 msec (for transport channel #2), as described above. Although the TFCI is transported every 10 msec, if 1 processing unit is 20 msec, the same TFCI will be transmitted twice. In such case, when the transport format has been decided for the first TFCI, the already decided transport format is adopted, even if the TFCI decoded in SP4 for the second time at present is not reliable.

When it is determined that the transport format has not yet been established within 1 processing unit in SP3 shown in Fig. 3, whether the data allocated to a certain transport channel which has been received at present is continuous data or not, that is, whether it is circuit switched data or not, is determined in SP5. If the data is not circuit switched type, memory area required is secured in SP6 for the maximum transport format, that is, TF3 in the example shown in Fig. 5A and TF1 in the example shown in Fig. 5B. When the data is for circuit switched type, whether a transport format other than TF0, that is, a TFCI indicating presence of data has been received at least once in the past after the start of reception is determined in SP7. The data is transmitted from the application layer after the radio circuit is opened, that is, after the radio communication control unit 5 opens the radio circuit. Therefore, some frames in which data do not exist occur at the start of communication. This process is performed to cope with the frames in which the data do not exist.

If any transport format other than TF0 (120 bits × 0 or 320 bits × 0) has not yet been received, it is determined in SP8 that the data does not exist. If any transport format other than TF0 has been received, whether the data is voice or not is determined in SP9. When it is not voice data, it is determined in SP11 that the transport format is the one in which data is present. The circuit switched data other than voice is continuous data, and therefore in actual cases, there are only two possibilities, that is, the existence of non-existence of transport format. For example, this is the case of transport channel #2 of Fig. 5B. When the circuit switched data is determined to be voice, the transport format of the maximum rate is adopted in SP10.

Voice, for example, is a type of circuit switched data, in which there are multiple transport formats, including mute, background noise, and speech data. Here, from the viewpoint of a user, the difference between mute and background noise is not very important, as compared with the actual speech data.

Even when erroneous conversion/signal processing for voice data is performed on no-data or the data of background noise, the result would be found incorrect in error detection, and at a voice CODEC unit, the result would be processed as mute. Therefore, processing the data as sound per se, is considered most useful.

The flow chart shown in Fig. 3 is performed repeatedly on the basis of 1 radio frame unit (for example, 10 msec), that is, for every unit of TFCI transport.

More detailed description will be given with reference to an example of transportation shown in Fig. 6. Fig. 6 represents an example in which two transport channels shown in Figs. 5A and 5B are multiplexed and transported, with the transport format undergoing transitions.

The transmission time interval (processing unit) of transport channel #1 shown in Fig. 5A is 20 msec, and therefore, the transport format is the same for 2 radio frame units. Similarly, the transmission time interval of transport channel #2 is 40 msec, and therefore, the transport format is the same for 4 radio frame units. Consequently, the TFCI changes in the minimum transmission time interval (in this case, 20 msec) between the multiplexed transport channels.

Figs. 7A and 7B represent a case in which the data on transport channel #1 is for packet switching, and the data on transport channel #2 is continuous data (ISDN or AV). Figs. 7C and 7D represent a case in which the data on transport channels #1 and #2 are both for packet switched.

In Fig. 7A, as the data on transport channel #2 is continuous data (ISDN or AV), the indication becomes TF0 along the process. Such change, however, never occurs in actual cases.

In Fig. 7B, Err is indicated in the fifth frame. This means that the result of TFCI decoding in Fig. 4 was determined to be invalid. Here, in Fig. 3 transport format of transport channel #2 is determined to be invalid in SP1; it is determined to be undecided in SP3; the transport data is determined to be circuit switched type in SP5; the transport channel is determined to have received other than TF0 in SP7; the transport data is determined to be non-voice in SP9; and presence of data is determined in SP11. In such case, the transport format for transport channel #2 is decided to be TF1.

In a conventional embodiment, when TFCI indicates Err, the processes themselves of format conversion and data decoding were impossible. In the present embodiment, proper processing becomes possible, based on the characteristic that the transport data is continuous.

As for the transport format for transport channel #1, it is determined to be invalid in SP1; it is determined to be not yet decided in SP3; the data is determined not for the circuit switching in SP5; maximum memory area is ensured in SP6, and the data at that time is abandoned and replaced by the data with reliability of 0. This process is performed expecting that the TFCI of the next frame is determined correctly. For example, when TF is determined to be proper by the next TFCI, it is expected that decoding is performed correctly with the data of the next frame, by error correction. This approach is particularly effective with long processing units such as 40 msec.

Fig. 7C represents an example when the result of TFCI decoding is determined to be invalid in the seventh radio frame.

Here, the transfer format for transport channel #1 is determined to be invalid in SP1; it is determined to be undecided in SP3; the transport data is determined to be not circuit switched type in SP5; and as the data is indefinite, the maximum memory area is ensured in SP6; and decision is made based on the next TFCI. The transport format for transport channel #2 is determined to be invalid in SP1; and it is determined to be established in SP3, and therefore, the format is processed as already decided TF1.

Accordingly, as compared with the conventional embodiment in which the processes themselves of data conversion and data decoding were impossible, proper processing becomes possible in the present embodiment, based on the characteristic that the TFCI is constant in 1 transmission time interval.

In the example shown in Fig. 7D, the TFCI indicates Err in the sixth radio frame, and transport channels #1 and #2 are both processed based on the already decided transport formats.

As described above, according to the embodiment of the present invention, even when the TFCI transported with the data is erroneous and TFCI cannot be detected correctly, the data itself can be processed appropriately, utilizing a characteristic of transmitted data and another characteristic that TFCI is not changed in 1 transmission time interval. Further, it is possible to present a method of determining validity of the result of error correction decoding without any error detection bit.

### Industrial Applicability

According to the present invention, utilizing a characteristic of transmitted data and another characteristic that the TFCI is not changed within a transmission time interval, it becomes possible to properly process the data itself, even when the TFCI cannot be detected correctly. Further, a method can be presented for determining the validity of the result of error correction decoding without any error detection bit, which can be used for a terminal device for radio communication, such as a mobile handset.

## Claims

1. A transport format decision method, comprising:
the first step of receiving data and an identification code indicating transport format thereof;
the second step of decoding said received identification code;
the third step of determining validity of the result of decoding in said second step;
the fourth step of determining the type of said received data; and
the fifth step of determining said transport format, based on the type determined by said fourth step, when it is determined in said third step that the result of decoding is invalid.

2. The transport format decision method according to claim 1, wherein
said transport format includes a first type format representing existence of data contents, and a second type format representing non-existence of data contents; and
when said determined type in said fourth step indicates circuit switched or continuous data, the format is determined to be the said first type format in the said fifth step.

3. A transport format decision method comprising:
the first step of receiving, per frame within one transmission time interval, transmitted data and an identification code indicating the transport format thereof;
the second step of determining existence/non-existence of a decided transport format decoded from an identification code of another frame received in said one transmission time interval and result of the decoding thereof is determined to be valid; and
the third step of determining, when it is determined in the said second step that there is already a decided transport format, the transport format of the data in the current frame to be the same as the decided transport format.

4. The transport format decision method according to claim 3, further comprising:
the fourth step of decoding the identification code of the current frame and determining validity of the result of decoding; and
when it is determined in the said fourth step that the result is invalid, performing the decision of the said third step.

5. A transport format decision method, comprising:
the first step of receiving, per frame within one transmission time interval, transmitted data and an identification code indicating transport format thereof;
the second step of decoding, per frame, the identification code of the current frame; and
the third step of determining a decided transport format in the said one transmission time interval, based on the result of decoding of each frame and validity of the respective results of decoding in the said second step.

6. The transport format decision method according to claim 5, further comprising:
the fourth step of threshold decision on reliability information of said result of decoding; and
the fifth step of determining said validity, based on the result of said threshold decision.

7. A transport format decision method, comprising:
the first step of receiving, per frame, circuit switched or continuous data and an identification code indicating the transport format thereof;
the second step of decoding said received identification code;
the third step of determining said transport format based on the result of decoding in the said second step; and
the fourth step of deciding, when the transport format is determined to indicate presence of data contents in the said third step, the transport format as an decided transport format, and deciding the transport format of the data received during communication thereafter to be the same as said decided transport format.
